# EUROPEAN PATENT SPECIFICATION

(11) **EP 2 167 571 B1**
(45) Date of publication and mention of the grant of the patent: **20.09.2017**
(21) Application number: 08773953.8
(22) Date of filing: 08.07.2008
(51) Int. Cl.: C08J 9/00, C08J 9/20, C08L 25/08, C08F 112/08, C08F 212/08

(54) **COMPOSITIONS OF EXPANDABLE VINYL AROMATIC POLYMERS AND PROCESS FOR THEIR PREPARATION**
ZUSAMMENSETZUNGEN VON EXPANDIERBAREN VINYLAROMAT-POLYMEREN UND HERSTELLUNGSVERFAHREN DAFÜR
COMPOSITIONS DE POLYMÈRES VINYL AROMATIQUES EXPANSIBLES ET LEUR PROCÉDÉ DE PRÉPARATION

(30) Priority: 18.07.2007 IT MI20071447
(43) Date of publication of application: 31.03.2010
(73) Proprietor: versalis S.p.A., 20097 San Donato Milanese (MI) (IT)
(72) Inventor: PONTICIELLO, Antonio, I-37060 Mozzecane (Verona) (IT); GHIDONI, Dario, I-46023 Gonzaga (Mantova) (IT); ZAMPERLIN, Loris, I-46047 Porto Mantovano (Mantova) (IT); SIMONELLI, Alessandra, I-46100 Mantova (IT)
(74) Representative: Bottero, Carlo
(86) International application number: PCT/EP2008/005630
(87) International publication number: WO 2009/010227

(56) References cited:
- DD-A1- 134 234
- GB-A- 1 448 402
- US-A1- 2006 276 557
- CREVECOEUR, J. J. ET AL: "Water expandable polystyrene (WEPS) part 2. In-situ synthesis of (block)copolymer surfactants" 1999, POLYMER , 40(13), 3691-3696 CODEN: POLMAG; ISSN: 0032-3861 , XP002530323 paragraph [Experimental 2.3] abstract
- DATABASE WPI Week 199320 Thomson Scientific, London, GB; AN 1993-162208 XP002530324 & JP 05 093118 A (TORAY IND INC) 16 April 1993 (1993-04-16)
- DATABASE WPI Week 197344 Thomson Scientific, London, GB; AN 1973-66380U XP002530325 & JP 48 055967 A (SEKISUI CHEM CO LTD) 6 August 1973 (1973-08-06)

## Description

The present invention relates to compositions of expandable vinyl aromatic polymers and the process for the preparation thereof.

More specifically, the present invention relates to granules based on expandable vinyl aromatic polymers, for example expandable styrene polymers which, after expansion, allow expanded beads to be obtained with a low density and reduced electrostaticity.

Even more specifically, the present invention relates to granules, comprising expandable polystyrene, which produce expanded beads capable of maintaining a reduced concentration of electrostatic charges on their outer surface, especially after repeated friction against each other.

Even more specifically, the present invention also relates to the process for the preparation of compositions of expandable vinyl aromatic polymers in the form of granules.

In the present description, all the operating conditions indicated in the text should be considered as being preferred conditions even if not expressly declared.

Expandable vinyl aromatic polymers, and among these, in particular, expandable polystyrene (EPS), are known products which have long been used for preparing articles which can be adopted in various applicative fields, among which one of the most important is the field of thermal insulation.

These articles are obtained by first swelling in a closed environment polymer granules impregnated with an expandable fluid, for example an aliphatic hydrocarbon such as pentane or hexane, and then molding the swollen particles contained inside a mould, by the contemporaneous effect of pressure and temperature. The swelling of the particles is generally effected with vapour, or another gas, maintained at a temperature slightly higher than the glass transition temperature (Tg) of the polymer.

As is well-known among experts in the field and as mentioned above, expandable vinyl aromatic polymers and, among these, expandable polystyrene, are in the form of compact granules impregnated with the expanding agent and with a diameter of the granules generally ranging from 0.5 to 1.5 mm.

During the processing phases, the granules are first pre-expanded in suitable recipients. The expanded beads thus obtained are aged for 12-24 hours and then charged into the moulds to produce the desired articles. After the pre-expansion phase, the expanded beads, both as such and containing agents for improving their performances, are pneumatically transported to the subsequent processing phases, using appropriate ducts. This type of transportation is in fact the simplest moving method to prevent the expanded beads from being dispersed in the environment.

Pneumatic transportation however causes a continuous friction between the beads, against each other, which in turn causes the formation of electrostatic charges on their surface. As electrostaticity can cause electric discharges which can trigger the combustion of the expanded beads, which are highly flammable, also due to the possible presence of residues of expanding agent, for example pentane, the transformation and processing plants, for example of expandable polystyrene, must be put to earth. In spite of this, there is always a high risk of combustion even if a flame-retardant has been added to the polymer.

In order to overcome this drawback it was suggested that quaternary ammonium salts be added to the granules, as described, for example, in European patent EP 289,321. Expansion with vapour however removes most of these salts, reducing the effect of the additive.

European patent EP 470.455 describes the use of an additive based on ammonium salts and silica. Also in this case, the expansion removes part of the antistatic agents. Furthermore, the presence of silica jeopardizes the sintering.

US patents 5,124,381 and 4,124,543 respectively describe the use of silica and derivatives of choline and aqueous solutions containing esters of sugar, esters of glycerin and polyols. The same problems remain as the vapour used in the expansion removes the additives.

The necessity is therefore felt for availing of a vinyl-aromatic-based expandable particle material, also containing an athermal agent, which is not subject to the phenomenon of the formation of electrostatic charges after it has been transformed into an expanded bead.

The Applicant has now found a vinyl-aromatic-based expandable composition in the form of granules which allows this result to be obtained. In particular, the Applicant has found that the use of reactive antistatic agents (i.e. which enter the polymeric chain of the vinyl aromatic polymer) reduces the electrostaticity of the expanded beads also for long periods of contact time with vapour, necessary for reaching extremely low densities.

A particular applicative field of expanded polystyrene is thermal insulation in the building industry where it is generally used in the form of flat sheets. Operators in the field try to obtain very low densities to save the initial raw material as they purchase EPS by weight but subsequently sell the end-product in expanded form, i.e. by volume.

In attempting to reach very low densities, in addition to solving the problem of electrostaticity, it is also important to guarantee a good thermo-insulating capacity. Even if it is technically possible to obtain low densities, it is not advantageous as it causes a drastic increase in the thermal conductivity of the sheet which must be compensated by an increase in its thickness. In order to overcome this drawback, it has been suggested to fill the polymer with athermanous materials such as, for example, graphite, carbon black, aluminum, etc.

European patent 620.246, for example, describes a process for the preparation of expandable polystyrene beads containing an athermanous material distributed on its surface or, alternatively, incorporated inside the particle itself.

Japanese patent application JP 63-183941 describes the use of graphite for improving the insulating capacity of polystyrene foams.

J.J. Crevecoeur et al. "Water expandable polystyrene (WEPS) part 2. In-situ synthesis of (block)copolymer surfactants", 1999, POLYMER, 40(13), 3691-3696 discloses water expandable polystyrenes (WEPS) wherein tiny water droplets are dispersed in the polymer beads through a polymer surfactant of styrene-sodium styrene sulphonate.
DATABASE WPI Week 197344 Thomson Scientific, London, GB; AN 1973-66380U XP 002530325 & JP 48 055967 A (SEKISUI CHEM CO LTD) 6 August 1973 (1973-08-06) discloses a composition of matter comprising a styrene thermoplastic resin, a poly(ether-estre-amide) and styrenesulphonic acid.
DD 134234 A1, 14 February 1979, discloses a process for the production of polymers and copolymers of expandable polystyrene resins by suspension polymerization in the presence of an alkylbenzene sulfonate as anti-static agent.

An object of the present invention therefore relates to a vinyl-aromatic-based expandable composition in the form of granules capable of giving expanded beads with a low density and reduced electrostaticity, as reported in the attached claims. The term vinyl aromatic (co)polymer, as used in the present description and claims, refers to polymeric products having a weight average molecular weight Mw ranging from 50,000 to 300,000, preferably from 70,000 to 220,000.

The vinyl aromatic (co)polymers, and also the copolymer (a1) can be obtained by polymerizing a mixture of monomers which comprises 50-100% by weight of one or more vinyl aromatic monomers and 0-50% by weight of at least one copolymerizable monomer.

The vinyl aromatic monomers can be selected from those corresponding to the following general formula: 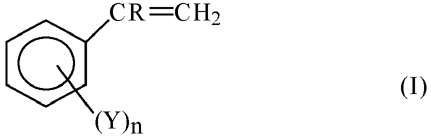 wherein R is a hydrogen or methyl group, n is zero or an integer ranging from 1 to 5 and Y is a halogen, such as chlorine or bromine, or an alkyl or alkoxyl radical having from 1 to 4 carbon atoms.

Examples of vinyl aromatic monomers having the above general formula, are: styrene, α-methylstyrene, methylstyrene, ethylstyrene, butylstyrene, dimethylstyrene, mono-, di-, tri-, tetra- and penta-chlorostyrene, bromostyrene, methoxy-styrene, acetoxy-styrene, etc. Preferred vinyl aromatic monomers are styrene and α-methylstyrene.

The vinyl aromatic monomers having general formula (I) can be used alone or in a blend of up to 50% by weight with other copolymerizable monomers. Examples of these monomers are (meth)acrylic acid, C₁-C₄ alkyl esters of (meth)acrylic acid such as methyl acrylate, methyl methacrylate, ethyl acrylate, ethyl methacrylate, isopropyl acrylate, butyl acrylate, amides and nitriles of (meth)acrylic acid such as acrylamide, methacrylamide, acrylonitrile, methacrylonitrile, butadiene, ethylene, divinyl benzene, maleic anhydride, etc.. Preferred monomers which can copolymerize are acrylonitrile and methyl methacrylate.

The copolymer (a1) contains from 0.005 to 10% by weight of a salt, or relative C₁-C₄ alkyl ester, of styrene sulfonic acid. The styrene sulfonic acid, either in the form of a metallic salt or ester, is preferably used in a quantity ranging from 0.08 to 3.0%, more preferably from 0.01 to 1.5%.

According to the present invention, in component (a2) the product selected from the salt, or corresponding C₁-C₄ alkyl ester, of styrene sulfonic acid and the copolymer of styrene with styrene sulfonic acid, in the form of a metallic salt or the relative C₁-C₄ alkyl esters, can be used in quantities ranging from 0.005 to 8% by weight, preferably from 0.01 to 6% by weight, for example from 0.05 to 4%.

The copolymer of styrene with styrene sulfonic acid, in the form of a salt or ester, has an average molecular weight Mw ranging from 150,000 to 250,000 and a content of sulfonic groups (salified or esterified), distributed in the polymeric chain, ranging from 0.5 to 10% in moles, preferably from 2 to 8%.

The copolymer of styrene with styrene sulfonic acid, in the form of a salt or esterified, is a product known in literature, described for example in US patent 3,870,841.

The salt of styrene sulfonic acid or styrene-styrene sulfonic acid copolymer is the alkaline or alkaline-earth salt, for example the sodium, potassium or calcium salt. Salts of other metals such as aluminum, or transition metals, for example zinc, iron, copper, chromium, manganese, etc., can be used however.

Any expanding agent capable of being englobed in a polymeric matrix can be used in a combination with the vinyl aromatic materials adopted for producing the expandable granulates, object of the present invention. In general, liquid substances with a boiling point ranging from 10 to 100°C, preferably from 20 to 80°C, are used. Typical examples are aliphatic or cyclo-aliphatic hydrocarbons containing from 3 to 6 carbon atoms such as n-pentane, iso-pentane, cyclopentane or mixtures thereof; halogenated derivatives of aliphatic hydrocarbons containing from 1 to 3 carbon atoms such as, for example, dichlorodifluoromethane, 1,2,2-trifluoroethane, 1,1,2-trifluoroethane and carbon dioxide.

In order to favour the retention of the expanding agent in the polymeric matrix, additives capable of forming bonds of both the weak type (for example hydrogen bridges) or strong type (for example acid-base adducts) can be used with the expanding agent. Examples of these additives are methyl alcohol, isopropyl alcohol, dioctylphthalate, dimethylcarbonate, derivatives containing an amine group.

If a vinyl-aromatic-based expandable composition in granule form capable of providing expanded beads with a reduced density and also with an improved thermal insulating capacity is desired, after sintering the expanded beads into end-articles, one or more athermanous agents can be added to the vinyl-aromatic-based composition, object of the present invention, selected from:
c) 0.01-25% by weight, calculated with respect to the polymer (a), of a carbon black having an average diameter ranging from 30 to 1000 nm, a surface area ranging from 5 to 200 m²/g, a sulfur content ranging from 0.1 to 100 ppm and an iodine number ranging from 5 to 40 mg/kg;
d)0.01-10% by weight, calculated with respect to the polymer (a), of a graphite, natural, synthetic, ex panded, expandable in powder form having a maximum dimension ranging from 0.05 to 100 µm;
e)0.01-10% by weight, calculated with respect to the polymer (a), of hydrotalcite or an inorganic derivative of silicon.

The carbon black filler, in particular primary particles of carbon black, has a dimension ranging from 30 to 1000 nm, preferably from 80 to 500 nm, a specific surface (measured according to ASTM D-6556) ranging from 5 to 200 m²/g, preferably 5 to 50 m²/g, a sulfur content ranging from 0.1 to 100 ppm, preferably from 0.1 to 60 ppm.

Other characteristics of carbon black are the following. An ash residue ranging from 0.001 to 1%, preferably from 0.01 to 0.3% (measured according to ASTM D-1506), a heat loss (measured according to ASTM D-1509) ranging from 0.001 to 1%, preferably from 0.01 to 0.5%, a DBPA (measured according to ASTM D-2414) of 5-100 ml/(100 g), preferably 20-80 ml/(100 g) and an iodine number (according to ASTM D-1510) ranging from 10 to 30 g/Kg.

According to the present invention, the carbon black can also be electrically conductive as it has a specific electric resistance lower than 15 ohm·cm, preferably lower than 10 ohm·cm, generally ranging from 2 to 8 ohm·cm.

The carbon black filler can be added to the vinyl-aromatic-based expandable composition in granule form in such quantities as to give a final concentration in the polymer ranging from 0.01 to 25% by weight, preferably from 0.05 to 20%, even more preferably from 0.1 to 10%.

The carbon black used in the present invention can be prepared according to the following main known technologies such a furnace process, thermal black process, acetylene black process or lampblack process.

Greater details on carbon black can be found, for example, in Kirk-Othmer, "Encyclopedia of Chemical Technology", fourth edition, volume 4, John Wiley & Sons.

The natural or synthetic graphite can have an average or dimensional (the average volumetric diameter of 50% of the powder particles) diameter, measured with a laser granulometer, (d₅₀) ranging from 0.05 to 100 µm, preferably from 1 to 13 µm, with a specific area of 5-20 m²/g. An example is the product Asbury 5 of Asbury having a diameter of 4.5 µm. The graphite can also be of the expanded or expandable type.

The graphite filler can be added to the vinyl-aromatic-based expandable composition in the form of granules in such quantities as to give a final concentration in the polymeric composition ranging from 0.01 to 10% by weight, preferably from 0.05 to 8%, even more preferably from 0.1 to 6%.

The hydrotalcite or silicon derivative are respectively used in a quantity ranging from 0.01 to 10% by weight, preferably from 1 to 7%, more preferably from 2 to 5%.

The silicon derivative is a product of the clay group, such as kaolinite and talc, micas, clays and montmorillonites. It is preferably talc.

The silicon derivative, as also the hydrotalcite, is in spheroidal form and can have an average or dimensional diameter ranging from 5 to 50 µm. An example of a silicon derivative is talc TL-16 of Teloon Chemicals with a dimensional diameter of 16 µm. The vinyl-aromatic-based expandable compositions in granule form, object of the present invention, can contain conventional additives, generally used with traditional vinyl aromatic polymers, such as pigments, stabilizing agents, flame-retardants, antistatic agents, detaching agents, etc. In particular, they can contain flame-retardants in a quantity ranging from 0.1 to 8% and synergic agents in a quantity ranging from 0.05 to 2%, with respect to the weight of the total material.

Flame-retardants which are particularly suitable for the vinyl-aromatic-based compositions are brominated aliphatic, cyclo-aliphatic, aromatic compounds such as hexabromocyclododecane, pentabromomonochloro-cyclohexane and pentabromophenyl allyl ether.

The vinyl-aromatic-based expandable compositions in granule form, object of the present invention, allow the production, after heating to a temperature equal to or higher than the glass transition temperature of the polymeric matrix (a), of expanded beads which, after 20 seconds of pneumatic transfer, with air for example, have an electrostaticity lower than 1000 volts, generally from 100 to 700 volts. The electrostaticity measurement is effected using a cylindrical metallic container having a diameter of 100 mm and a height of 30 mm, with a lid and trigger for insufflating air tangentially at 30 degrees.

The electrostaticity is measured with an electrometer equipped with a relative probe. 50 ml of expanded beads are positioned in the metallic container, closing it with the lid and insufflating air from an air system (23°C - relative humidity of 50%, flow-rate of 3.8 m³/h) for 20 seconds. The lid is then opened, the electrometric probe is introduced resting it on the layer of beads situated on the bottom of the container and the potential is measured (in volts) 18 seconds after opening the lid.

Once sintered, the expandable beads allow expanded articles with a density ranging from 5 to 50 g/l, preferably from 10 to 25 g/l, to be obtained.

In particular, said expanded articles have an excellent thermal insulation capacity expressed by a thermal conductivity ranging from 25 to 50 mW/mK, preferably from 30 to 45 mW/mK. The measurement of the thermal conductivity is effected at 10°C according to the DIN 13163 method on the end-products obtained from the blocks having a density of 15 g/l.

A further object of the present invention relates to a process for the preparation of vinyl-aromatic-based expandable compositions in granule form which, after expansion, have a density of less than 50 g/l and an electrostaticity lower than 1,000 volts, after 20 seconds of pneumatic transfer.

In particular, a further object of the present invention relates to a process for preparing vinyl-aromatic-based expandable compositions in granule form, according to claim 8, which comprises polymerizing in an aqueous suspension, one or more vinyl aromatic monomers, optionally together with at least one polymerizable comonomer in a quantity of up to 50% by weight, possibly in the presence of a filler comprising one or more of the additives (c)-(e) mentioned above, and in the presence of a radicalic initiator, a salt, or C₁-C₄ alkyl ester, of styrene sulfonic acid, and/or a copolymer of styrene with a salt, or the corresponding C₁-C₄ alkyl ester, of styrene sulfonic acid and an expanding agent (b) added before, during or at the end of the polymerization.

The polymerization is carried out in an aqueous suspension preferably also in the presence of suspending agents selected from inorganic salts of phosphoric acid, for example, tri-calcium phosphate or magnesium phosphate. These salts of phosphoric acid can be added to the polymerization mixture both already finely subdivided or synthesized in situ by reaction, for example, between sodium pyrophosphate and magnesium sulphate.

The polymerization can also be carried out in the presence of further organic suspending agents such as polyvinylpyrrolidone, polyvinyl alcohol, etc.

The initiating system normally comprises two peroxides, the first with a halving time of one hour at 85-95°C and the other with a halving time of one hour at 110-120°C. Examples of these initiators are benzoylperoxide and tertbutylperbenzoate.

The vinyl aromatic polymer or copolymer which is obtained has an average molecular weight Mw ranging from 50,000 to 300,000, preferably from 70,000 to 220,000. In general, more details on processes for the preparation of expandable vinyl aromatic polymers in aqueous solution or, more generally, polymerization in suspension, can be found in Journal of Macromolecular Science, Review in Macromolecular Chemistry and Physics C31 (263) 215-299 (1991).

To improve the stability of the suspension, it is possible to enhance the viscosity of the reagent solution, comprising the vinyl aromatic monomer, by dissolving vinyl aromatic polymer therein, in a concentration of 1 to 30% by weight, preferably from 5 to 20%, calculated with respect to the monomer alone, optionally together with the copolymer of styrene with a salt, or the corresponding C₁-C₄ alkyl ester, of styrene sulfonic acid.

The solution can be obtained by dissolving a preformed polymer in the reagent mixture (for example fresh polymer or waste-products from previous polymerizations and/or expansions) or by a mass pre-polymerization of the monomer, or blend of monomers, until the above-mentioned concentrations are obtained, and subsequently continuing the polymerization in aqueous suspension.

During the polymerization in suspension, further polymerization additives are used which are typically those for producing expandable vinyl aromatic polymers, such as stabilizing agents of the suspension, chain-transfer agents, expansion co-adjuvants, nucleating agents, plasticizers, flame-retardants etc..

The expanding agents are preferably added during the polymerization phase, or subsequently by means of the re-suspension technology. In particular, the latter comprises the following phases:
polymerizing in aqueous suspension one or more vinyl aromatic monomers, optionally in the presence of the filler comprising the additives (c)-(e), and the salt or ester of styrene sulfonic acid, and/or the copolymer of styrene with a salt, or the corresponding C₁-C₄ alkyl ester, of styrene sulfonic acid;
separating the granules thus obtained;
resuspending the granules in water and heating until their spherulization;
adding expanding agents to the suspension and keeping the granules in contact with them until impregnation; and re-separating the granules.

The expanding agents are selected from aliphatic or cyclo-aliphatic hydrocarbons containing from 3 to 6 carbon atoms such as n-pentane, iso-pentane, cyclopentane or blends thereof; halogenated derivatives of aliphatic hydrocarbons containing from 1 to 3 carbon atoms, such as, for example, dichlorodifluoromethane, 1,2,2-trifluoroethane, 1,1,2-trifluoroethane and carbon dioxide.

At the end of the polymerization, possibly at the end of the re-suspension, substantially spherical polymer beads are obtained, with an average diameter ranging from 0.2 to 2 mm, in which the expanding agent and possible additives are homogeneously dispersed.

The beads are then discharged from the polymerization reactor and washed, in continuous or batchwise, with non-ionic surface-active agents or, alternatively, with acids, as described in US patent 5,041,465. The polymer beads can be treated thermally with hot air ranging from 30 to 60°C.

A further object of the present invention relates to a process for preparing in continuous mass, vinyl-aromatic-based expandable compositions in granule form, according to claim 9, which includes the following steps in series:
i) adding a salt, or the relative C₁-C₄ alkyl ester, of styrene sulfonic acid, or a copolymer of styrene with a salt, or relative C₁-C₄ alkyl ester, of styrene sulfonic acid and optionally the additives (c)-(e) mentioned above, to a vinyl aromatic (co)polymer in granule form or already in the molten state, with an average molecular weight Mw ranging from 50,000 to 300,000, preferably from 70,000 to 220,000;
ii) optionally heating the vinyl aromatic polymer to a temperature higher than the relative melting point;
iii) incorporating the expanding agent (b) and other possible additives such as flame retardants, in the molten polymer, before extrusion through a die;
iv) mixing the polymeric composition thus obtained by means of static or dynamic mixing elements; and
v) granulating the composition thus obtained in a device which comprises a die, a cutting chamber and a cutting system.

At the end of the granulation, expandable beads can be obtained with a substantially spherical form having an average diameter ranging from 0.2 to 2 mm.

According to the present invention, step (i) can be effected by feeding the polymeric granule already formed, possibly mixed with processing waste products, in an extruder. The single components are mixed therein, the polymeric portion is subsequently melted and the additives and expanding agent are added.

Alternatively, the polymer can be used already in the molten state, coming directly from the polymerization plant (in solution), particularly from the devolatilization unit. The molten polymer is fed to suitable devices, for example an extruder or a static mixer, where it is mixed with all the additives/components and then with the expanding agent and, it is subsequently extruded to give the expandable granulate, object of the present invention.

The granules of the polymeric composition can be annealed at a temperature lower than or equal to the glass transition temperature (Tg) or slightly higher, for example the Tg plus up to 8°C, possibly under pressure. A detailed method for preparing vinyl aromatic polymers in continuous mass, is described in international patent application WO 03/53651.

At the end of the polymerization process, whether it be effected in suspension or continuous mass, the expandable beads produced are subjected to pre-treatment which is normally applied to conventional expandable beads and which essentially consists in:
1) covering the beads with an antistatic liquid agent such as amines, ethoxylated tertiary alkylamines, ethylene oxide/propylene oxide copolymers, etc.. Said agent allows the coating to adhere and facilitates the screening of the beads prepared in suspension;
2) applying the coating to said beads, which essentially consists of a mixture of mono-, di- and tri-esters of glycerine (or other alcohols) with fatty acids, and metal stearates such as zinc and/or magnesium stearate, possibly mixed with carbon black.

Some illustrative and non-limiting examples are provided hereunder for a better understanding of the present invention and for its embodiment.

### EXAMPLE 1 (comparative 1)

A mixture is charged into a closed and stirred container, consisting of 115 parts by weight of water, 0.3 parts of tricalcium phosphate C13-08 of the company Budenheim (DE), previously dispersed in 30 parts of water, 100 parts of styrene, 0.30 parts of benzoyl peroxide, 0.25 parts of tert-butyl perbenzoate. The mixture is heated under stirring to 90°C; when a temperature of 80°C is reached, 0.01 parts of sodium metabisulfite pre-dissolved in 5 parts of water, are charged.

After about 4 hours at 90°C, a further 0.6 parts of tricalcium phosphate, previously dispersed in 60 parts of water and subsequently 7 parts of a 70/30 mixture of n-pentane and i-pentane are added, still under stirring, the whole mixture is heated for a further 4 hours to 125°C, it is then cooled and the batch is discharged.

The granules of expandable polymer thus produced are subsequently collected, washed, dried in an air flow at 23°C, 0.02% of a non-ionic surface-active agent is then added, consisting of a condensate of ethylene oxide and propylene oxide on a glycerine base, Pluronic 3100, sold by BASF, and sieved to separate the fraction with a diameter ranging from 1 to 1.5 mm.

0.2% of glyceryl monostearate and 0.1% of zinc stearate are added to the fraction of 1 to 1.5 mm.

The product is pre-expanded with vapour at a temperature of 100°C, at a density of 15.0 g/l. The beads obtained are left to age for 24 hours at 23°C and at a relative humidity of 50%. The electrostaticity, measured after 20 seconds of pneumatic transportation with air proved to be 3,000 volts. The remaining beads were used for evaluating the blocks in moulding (dimensions 1040x1030x550 mm) at 0.6 bars of vapour pressure. The cooling time proved to be 10 minutes.

The blocks were then cut to complete the evaluation. The sintering proved to be 60% and the thermal conductivity 41.5 mW/mK.

### EXAMPLE 2

Example 1 is repeated substituting the sodium metabisulfite with an equal quantity of sodium styrene sulfonate sold by XZL Chemical Co. dissolved in 5 parts of water.

The product is processed with the same procedure as comparative example 1. The electrostaticity, measured after 20 seconds of pneumatic transportation with air proved to be 800 volts, the cooling time of the blocks (density 15.0 g/l) was 11 minutes, the sintering proved to be 65% and the thermal conductivity 37 mW/mK.

### EXAMPLE 3

Example 1 is repeated substituting the sodium metabisulfite with an equal quantity of sodium styrene sulfonate (again sold by XZL Chemical Co.) dissolved in 5 parts of water and charging said product in two equal parts. Half (0.025 parts) is introduced at 80°C and half (0.025 parts) after a residence time of 60 minutes at 90°C.

The product is processed with the same procedure as comparative example 1.

The electrostaticity, measured after 20 seconds of pneumatic transportation with air proved to be 700 volts, the cooling time of the blocks (density 15.0 g/l) was 10 minutes, the sintering proved to be 55% and the thermal conductivity 36,5 mW/mK.

### EXAMPLE 4 (comparative 2)

100 parts of styrene and 2.5 parts of carbon black MT 990 UP sold by Concarb, having an average diameter of 200-300 nm, a surface area of 30 m²/g, an ash content of 0.02%, a sulphur content equal to 60 ppm, a heat loss of 0.1%, are charged into a closed and stirred container. The mixture is heated under stirring to 70°C for 2 hours. The carbon black mix dispersed in styrene is transferred to another container in which 115 parts by weight of water, 0.3 parts of tricalcium phosphate C13-08 of Budenheim (predispersed in 30 parts of water), 0.30 parts of tert-butyl peroxyethylhexanoate, sold by Akzo with the TM Trigonox 21S, and 0.25 parts of tert-butyl perbenzoate were previously mixed.

Heating is started to 90°C under stirring. When a temperature of 80°C is reached, 0.01 parts of sodium metabisulfite pre-dissolved in 5 parts of water are charged.

After about 4 hours at 90°C, under constant stirring, a further 0.6 parts of tricalcium phosphate, previously predispersed in 60 parts of water are added and subsequently 7 parts of a 70/30 mixture of n-pentane and i-pentane. The mixture is heated for 4 hours at 125°C, it is then cooled and the batch is discharged. The average diameter of the granules is 1.0 mm. The granules of expandable polymer thus produced are subsequently recovered, washed, dried in an air flow at 23°C, 0.02% of Pluronic 3100 are added, and they are then sieved to separate the fraction of 1 to 1.5 mm.

This fraction is processed with the same procedure as the previous examples i.e. 0.2% of glyceryl monostearate and 0.1% of zinc stearate are added and it is then expanded. The electrostaticity, measured after 20 seconds of pneumatic transportation with air proved to be 2000 volts, the cooling time of the blocks was 15 minutes, the sintering proved to be 65% and the thermal conductivity 34 mW/mK.

### EXAMPLE 5

Example 4 is repeated substituting the sodium metabisulfite with an equal quantity of sodium styrene sulfonate dissolved in 5 parts of water. The average diameter of the granules is 1.3 mm.

The product is processed with the same procedure, again separating the fraction of 1 to 1,5 mm. The electrostaticity proved to be 700 volts, the cooling time of the blocks 10 minutes, the sintering 60% and the thermal conductivity 32 mW/mK.

### EXAMPLE 6

Example 5 is repeated introducing carbon black MT 990 UP in master form at 50% of polystyrene which is dissolved in the monomer. The average diameter of the granule produced proved to be 1.6 mm. The final characteristics of the beads and expanded articles remain substantially unvaried.

### EXAMPLE 7

Example 5 is repeated adding 1% of Asbury 5 graphite to 2% of carbon black MT 990 UP. The product is processed with the same procedure and the electrostaticity proved to be 500 volts, the cooling time of the blocks 15 minutes, the sintering 50% and the thermal conductivity 31 mW/mK.

### EXAMPLE 8

95.3 parts of molten polystyrene Edistir N1782, 2 parts of carbon black MT990UP, 1 part of Asbury 5 graphite, 1.2 parts of stabilized hexabromocyclododecane (EBCD), sold by Great Lakes as BRE 5300, 0.4 parts of diphenyl butane, 0.5 parts of sodium styrene sulfonate are fed into an extruder. After mixing the additives, 4% of a mixture of n/i-pentane 80/20 are fed to the extruder, as expanding agent, through a specific injection line.

The expandable polymer is extruded through the holes of a die, cut with knives, dried, 200 ppm of glycerin are added, lubricated with 0.1% by weight of metallic stearates and 0.3% by weight of glyceryl monostearate.

The granules are then expanded to 15.0 g/l, measuring the electrostaticity which proved to be 600 volts. Blocks are moulded with the remaining part of the expanded beads, with a cooling time of 10 minutes, a sintering of 70% and a thermal conductivity of 30.5 mW/mK. Test samples are taken from the blocks for the fire test according to the regulation DIN 4102. The test is carried out after conditioning in an oven: the product passes the test B2.

### EXAMPLE 9

Example 8 is repeated with the same procedure substituting the sodium styrene sulfonate (0.5 parts) with 4 parts of polystyrene-sodium sulfonate copolymer at 5% in moles of sulfonate (Mw of 185,000) prepared according to what is described in US patent 3,870,841. The electrostaticity proved to be 700 volts, the cooling time of the blocks 7 minutes, the sintering 50%.

## Claims

1. A vinyl-aromatic-based expandable composition in the form of granules capable of giving expanded beads with a density ranging from 5 to 50 g/l and electrostaticity lower than 1,000 volts after 20 seconds of pneumatic transportation which comprises:
a. a polymeric matrix selected from:
a1. a copolymer containing:
90-99.995% of at least one vinyl aromatic monomer; and
0.005-10% by weight of a salt or the corresponding C₁-C₄ alkyl ester, of styrene sulfonic acid; or
a2. a polymeric mixture comprising:
92-99.995% by weight of a vinyl aromatic (co)polymer; and
0.005-8% by weight of a product selected from a salt, or the corresponding C₁-C₄ alkyl ester, of styrene sulfonic acid and a copolymer of styrene with a salt, or the corresponding C₁-C₄ alkyl ester, of styrene sulfonic acid; and
b. 1-10% by weight, calculated with respect to the polymeric matrix (a), of an expanding agent selected from aliphatic or cycloaliphatic hydrocarbons containing from 3 to 6 carbon atoms or mixtures thereof, halogenated derivatives of aliphatic hydrocarbons containing from 1 to 3 carbon atoms and carbon dioxide.

2. The composition according to claim 1, wherein the salt of styrene sulfonic acid or the salt of the copolymer of styrene with styrene sulfonic acid is selected from the salts of alkaline or alkaline earth metals.

3. The composition according to any of the previous claims, which comprises one or more athermanous agents selected from:
c) 0.01-25% by weight, calculated with respect to the polymer (a), of a carbon black having an average diameter ranging from 30 to 1,000 nm, a surface area ranging from 5 to 200 m²/g, a sulfur content ranging from 0.1 to 100 ppm and an iodine number ranging from 5 to 40 mg/kg;
d) 0.01-10% by weight, calculated with respect to the polymer (a), of a graphite, natural, synthetic, expanded, expandable in powder form having a maximum dimension ranging from 0.05 to 100 µm;
e)0.01-10% by weight, calculated with respect to the polymer (a), of hydrotalcite or an inorganic derivative of silicon.

4. The composition according to any of the previous claims comprising flame-retardants in a quantity ranging from 0.1 to 8% and synergic agents ranging from 0.05 to 2%, with respect to the weight of the (co)polymer.

5. The composition according to claim 1, wherein in component (a2) the copolymer of styrene with styrene sulfonic acid, in the form of a salt or ester, has an average molecular weight Mw ranging from 150,000 to 250,000 and a content of sulfonic groups (salified or esterified), distributed in the polymeric chain, ranging from 0.5 to 10% in moles.

6. Expanded beads obtained by heating the compositions in the form of granules according to any of the previous claims to the glass transition temperature of the polymeric matrix (a) which, after 20 seconds of pneumatic transportation, have an electrostaticity from 100 to 700 volts.

7. Expanded articles, which can be obtained by sintering the expanded beads of claim 6, having a thermal conductivity ranging from 25 to 50 mW/mK.

8. A process for preparing vinyl-aromatic-based expandable compositions in the form of granules, according to claim 1, which comprises polymerizing in an aqueous suspension, one or more vinyl aromatic monomers, optionally together with at least one polymerizable comonomer in a quantity of up to 50% by weight, possibly in the presence of a filler comprising the additives (c)-(e) mentioned in claim 3, and in the presence of a radicalic initiator, a salt, or C₁-C₄ alkyl ester, of styrene sulfonic acid, and/or a copolymer of styrene with a salt, or the corresponding C₁-C₄ alkyl ester, of styrene sulfonic acid and an expanding agent (b), added before, during or at the end of the polymerization, selected from aliphatic or cycloaliphatic hydrocarbons containing from 3 to 6 carbon atoms or mixtures thereof, halogenated derivatives of aliphatic hydrocarbons containing from 1 to 3 carbon atoms and carbon dioxide.

9. A process for preparing in continuous mass vinyl-aromatic-based expandable compositions in the form of granules, according to claim 1, which comprises the following steps in series:
i) adding a salt, or the relative C₁-C₄ alkyl ester, of styrene sulfonic acid, or a copolymer of styrene with a salt, or relative C₁-C₄ alkyl ester, of styrene sulfonic acid and optionally the additives (c)-(e) mentioned in claim 3, to a vinyl aromatic (co)polymer in granule form or already in the molten state, with an average molecular weight Mw ranging from 50,000 to 300,000;
ii) optionally heating the vinyl aromatic polymer to a temperature higher than the relative melting point;
iii)incorporating the expanding agent (b), selected from aliphatic or cycloaliphatic hydrocarbons containing from 3 to 6 carbon atoms or mixtures thereof, halogenated derivatives of aliphatic hydrocarbons containing from 1 to 3 carbon atoms and carbon dioxide, and other possible additives such as flame retardants, in the molten polymer, before extrusion through a die;
iv)mixing the polymeric composition thus obtained by means of static or dynamic mixing elements; and
v)granulating the composition thus obtained in a device which comprises a die, a cutting chamber and a cutting system.

## Patentansprüche

1. Vinyl-aromatisch-basierte, expandierbare Zusammensetzung in Form von Körnchen, befähigt expandierte Perlen zu ergeben, mit einer Dichte in einem Bereich von 5 bis 50 g/l und einer Elektrostatizität geringer als 1000 Volt nach 20 Sekunden pneumatischem Transport, welches umfasst:
a. eine polymere Matrix ausgewählt aus:
a1. ein Copolymer, enthaltend:
90-99,995 % mindestens eines Vinyl-aromatischen Monomers; und
0,005-10 Gew.-% eines Salzes oder des entsprechenden C₁-C₄-Alkylesters der Styrensulfonsäure; oder
a2. eine polymere Mischung, umfassend:
92-99,995 Gew.-% eines Vinyl-aromatischen (Co)polymers; und
0,005-8 Gew.-% eines Produktes, ausgewählt aus einem Salz oder dem entsprechenden C₁-C₄-Alkylester der Styrensulfonsäure und einem Copolymer aus Styren mit einem Salz, oder dem entsprechenden C₁-C₄-Alkylester der Styrensulfonsäure; und
b. 1-10 Gew.-%, berechnet hinsichtlich der polymeren Matrix (a), eines Expandiermittels, ausgewählt aus aliphatischen oder cycloaliphatischen Kohlenwasserstoffen, enthaltend 3 bis 6 Kohlenstoffatome oder Mischungen davon, halogenierte Derivate von aliphatischen Kohlenwasserstoffen, enthaltend 1 bis 3 Kohlenstoffatome, und Kohlenstoffdioxid.

2. Zusammensetzung nach Anspruch 1, worin das Salz der Styrensulfonsäure oder das Salz des Copolymers aus Styren mit Styrensulfonsäure ausgewählt ist aus den Salzen der Alkali- oder Erdalkalimetalle.

3. Zusammensetzung nach irgendeinem der vorhergehenden Ansprüche, welche eines oder mehrere athermane Mittel umfasst, ausgewählt aus:
c. 0,01-25 Gew.-%, berechnet hinsichtlich des Polymers (a), Ruß mit einem durchschnittlichen Durchmesser in einem Bereich von 30 bis 1000 nm, einem Oberflächenbereich in einem Bereich von 5 bis 200 m²/g, einem Schwefelgehalt in einem Bereich von 0,1 bis 100 ppm und einer Iod-Zahl in einem Bereich von 5 bis 40 mg/kg;
d. 0,01-10 Gew.-%, berechnet hinsichtlich des Polymers (a), Graphit, natürlich, synthetisch, expandiert, expandierbar in Pulverform mit einer maximalen Dimension in einem Bereich von 0,05 bis 100 µm;
e. 0,01-10 Gew.-%, berechnet hinsichtlich des Polymers (a), Hydrotalcit oder ein anorganisches Derivat des Siliziums.

4. Zusammensetzung nach irgendeinem der vorhergehenden Ansprüche, umfassend flammhemmende Mittel in einer Menge in einem Bereich von 0,1 bis 8 % und synergistische Mittel in einem Bereich von 0,5 bis 2 %, hinsichtlich des Gewichts des (Co)polymers.

5. Zusammensetzung nach Anspruch 1, worin in der Komponente (a2) das Copolymer aus Styren mit Styrensulfonsäure in Form eines Salzes oder Esters ein mittleres Molekulargewicht Mw in einem Bereich von 150 000 bis 250 000 und einen Gehalt an Sulfongruppen (versalzt oder verestert), verteilt in der polymeren Kette, in einem Bereich von 0,5 bis 10% in Molen hat.

6. Expandierte Perlen, erhalten durch Erwärmung der Zusammensetzung in Form von Körnchen gemäß irgendeinem der vorhergehenden Ansprüche auf die Glasübergangstemperatur der polymeren Matrix (a), die nach 20 Sekunden pneumatischem Transport eine Elektrostatizität von 100 bis 700 Volt haben.

7. Expandierte Gegenstände, die durch Sinterung der expandierten Perlen nach Anspruch 6 erhalten werden können, mit einer thermischen Leitfähigkeit in einem Bereich von 25 bis 50 mW/mK.

8. Verfahren zur Herstellung Vinyl-aromatisch-basierter expandierbarer Zusammensetzungen in Form von Körnchen, gemäß Anspruch 1, umfassend die Polymerisierung in einer wässrigen Suspension von einem oder mehreren vinyl-aromatischen Monomeren, die gegebenenfalls mit mindestens einem polymerizierbaren Comonomer in einer Menge von bis zu 50 Gew.-%, möglicherweise eines Füllstoffs, umfassend die Additive (c)-(e), erwähnt in Anspruch 3, und in Gegenwart eines Radikalinitiators, eines Salzes oder C₁-C₄-Alkylesters aus Styrensulfonsäure und/oder einem Copolymer aus Styren mit einem Salz, oder dem entsprechenden C₁-C₄-Alkylester aus Styrensulfonsäure und einem Expandiermittel (b), hinzugegeben vor, während oder am Ende der Polymerisierung, ausgewählt aus aliphatischen oder cycloaliphatischen Wasserstoffen, enthaltend von 3 bis 6 Kohlenstoffatomen oder Mischungen davon, halogenierten Derivaten der aliphatischen Kohlenwasserstoffe, enthaltend 1 bis 3 Kohlenwasserstoffatome und Kohlenstoffdioxid.

9. Verfahren zur Herstellung in kontinuierlicher Masse von Vinyl-aromatischbasierten, expandierbaren Zusammensetzungen in Form von Körnchen, gemäß Anspruch 1, welches die folgenden aufeinander folgenden Schritte umfasst:
i) Hinzufügen eines Salzes oder des relativen C₁-C₄-Alkylesters der Styrensulfonsäure oder eines Copolymers aus Styren mit einem Salz, oder relativen C₁-C₄-Alkylesters der Styrensulfonsäure, und gegebenenfalls der Additive (c)-(e), erwähnt in Anspruch 3, zu einem Vinyl-aromatischen (Co)polymer in Körnchen-Form oder bereits in geschmolzenem Zustand, mit einem durchschnittlichen Molekulargewicht Mw in einem Bereich von 50 000 bis 300 000;
ii) gegebenenfalls Erwärmung des Vinyl-aromatischen Polymers auf eine Temperatur großer als der relative Schmelzpunkt;
iii) Aufnehmen des Expandiermittels (b), ausgewählt aus aliphatischen oder cycloaliphatischen Kohlenwasserstoffen, mit 3 bis 6 Kohlenstoffatomen oder Mischungen davon, halogenierten Derivaten der aliphatischen Kohlenwasserstoffe mit 1 bis 3 Kohlenstoffatomen und Kohlenstoffdioxid, und anderer möglicher Additive, wie beispielsweise flammhemmende Mittel, in dem geschmolzenen Polymer vor Extrusion durch eine Düse;
iv) Mischen der so erhaltenen polymeren Zusammensetzung mittels statischer oder dynamischer Mischelemente; und
v) Granulierung der so erhaltenen Zusammensetzung in einer Vorrichtung, die eine Düse, eine Schnittkammer und ein Schnittsystem umfasst.

## Revendications

1. Composition expansible à base de vinyl-aromatique, sous la forme de granules capables de donner des perles expansées qui présentent une masse volumique de 5 à 50 g/L et une électrostaticité inférieure à 1000 volts après 20 secondes de transport pneumatique, laquelle composition comprend :
a) une matrice polymère choisie parmi
a1) un copolymère comportant
de 90 à 99,995 % d'au moins un monomère vinyl-aromatique, et de 0,005 à 10 % en poids d'un sel d'acide styrène-sulfonique ou d'un ester d'alkyle en C₁-C₄ correspondant,
a2) ou un mélange à base de polymère comprenant :
de 92 à 99,995 % en poids d'un polymère ou copolymère poly(vinyl-aromatique),
et de 0,005 à 8 % en poids d'un produit choisi parmi un sel d'acide styrène-sulfonique ou un ester d'alkyle en C₁-C₄ correspondant et un copolymère de styrène et d'un sel d'acide styrène-sulfonique ou d'un ester d'alkyle en C₁-C₄ correspondant,
b) et de 1 à 10 % en poids, par rapport à la matrice polymère (a), d'un agent d'expansion choisi parmi les hydrocarbures, aliphatiques ou cycloaliphatiques comportant de 3 à 6 atomes de carbone, les mélanges de tels hydrocarbures, les dérivés halogénés d'hydrocarbures aliphatiques comportant de 1 à 3 atomes de carbone, et le dioxyde de carbone.

2. Composition conforme à la revendication 1, dans laquelle le sel d'acide styrène-sulfonique ou le sel de copolymère de styrène et d'acide styrène-sulfonique est choisi parmi les sels de métal alcalin ou alcalino-terreux.

3. Composition conforme à l'une des revendications précédentes, qui comprend en outre un ou plusieurs agents athermanes choisis parmi :
c) de 0,01 à 25 % en poids, par rapport au polymère (a), d'un noir de carbone qui présente un diamètre moyen de particules valant de 30 à 1000 nm, une aire spécifique valant de 5 à 200 m²/g, une teneur en soufre valant de 0,1 à 100 ppm, et un indice d'iode valant de 5 à 40 mg/kg ;
d) de 0,01 à 10 % en poids, par rapport au polymère (a), d'un graphite naturel ou synthétique, expansé ou expansible, qui se présente sous la forme d'une poudre dont les particules ont une taille maximale de 0,05 à 100 µm ;
e) et de 0,01 à 10 % en poids, par rapport au polymère (a), d'hydrotalcite ou d'un dérivé inorganique du silicium.

4. Composition conforme à l'une des revendications précédentes, comprenant des agents ignifugeants en une proportion valant de 0,1 à 8 % et des agents synergiques en une proportion valant de 0,05 à 2 %, par rapport au poids du polymère ou copolymère.

5. Composition conforme à la revendication 1, dans laquelle, dans le composant (a2), le copolymère de styrène et d'acide styrène-sulfonique, à l'état de sel ou d'ester, a une masse molaire moyenne Mw valant de 150 000 à 250 000 et une teneur en groupes sulfoniques, salifiés ou estérifiés et répartis dans la chaîne de polymère, qui vaut de 0,5 à 10 % en moles.

6. Perles expansées obtenues par chauffage d'une composition sous forme de granules, conforme à l'une des revendications précédentes, à la température de transition vitreuse de la matrice polymère (a), qui présentent, après 20 secondes de transport pneumatique, une électrostaticité de 100 à 700 volts.

7. Articles expansés, accessibles par frittage de perles expansées conformes à la revendication 6, et présentant une conductivité thermique valant de 25 à 50 mW/mK.

8. Procédé de préparation de compositions expansibles à base de vinyl-aromatique sous forme de granules, conformes à la revendication 1, qui comprend le fait de faire polymériser en suspension aqueuse un ou plusieurs monomère(s) vinyl-aromatique(s), en option conjointement avec au moins un comonomère polymérisable utilisé en une proportion valant jusqu'à 50 % en poids, éventuellement en présence d'une charge comprenant les adjuvants (c) à (e) indiqués dans la revendication 3, et en présence d'un amorceur radicalaire, d'un sel d'acide styrène-sulfonique ou d'un ester d'alkyle en C₁-C₄ correspondant, et/ou d'un copolymère de styrène et d'un sel d'acide styrène-sulfonique ou d'un ester d'alkyle en C₁-C₄ correspondant, ainsi que d'un agent d'expansion (b), ajouté avant, pendant ou à la fin de la polymérisation et choisi parmi les hydrocarbures aliphatiques ou cycloaliphatiques comportant de 3 à 6 atomes de carbone, les mélanges de tels hydrocarbures, les dérivés halogénés d'hydrocarbures aliphatiques comportant de 1 à 3 atomes de carbone, et le dioxyde de carbone.

9. Procédé de préparation en mode continu de compositions expansibles à base de vinyl-aromatique sous forme de granules, conformes à la revendication 1, qui comporte les étapes successives suivantes :
i) ajouter un sel d'acide styrène-sulfonique ou un ester d'alkyle en C₁-C₄ correspondant, ou un copolymère de styrène et d'un sel d'acide styrène-sulfonique ou d'un ester d'alkyle en C₁-C₄ correspondant, et en option, les adjuvants (c) à (e) indiqués dans la revendication 3, à un polymère ou copolymère poly(vinyl-aromatique), sous forme de granules ou déjà à l'état fondu, présentant une masse molaire moyenne Mw valant de 50 000 à 300 000 ;
ii) en option, chauffer le polymère poly(vinyl-aromatique) à une température plus élevée que le point de fusion relatif ;
iii) incorporer l'agent d'expansion (b), choisi parmi les hydrocarbures aliphatiques ou cycloaliphatiques comportant de 3 à 6 atomes de carbone, les mélanges de tels hydrocarbures, les dérivés halogénés d'hydrocarbures aliphatiques comportant de 1 à 3 atomes de carbone, et le dioxyde de carbone, et d'autres adjuvants éventuels comme un agent ignifugeant, au polymère fondu avant d'extruder celui-ci en le faisant passer à travers une filière ;
iv) brasser la composition de polymère ainsi obtenue, au moyen d'éléments mélangeurs statiques ou dynamiques ;
v) et réduire la composition ainsi obtenue en granules, dans un dispositif comprenant une filière, une chambre de coupe et un système de coupe.
